# EUROPEAN PATENT SPECIFICATION

(11) **EP 1 513 897 B1**
(45) Date of publication and mention of the grant of the patent: **11.10.2006**
(21) Application number: 03734111.2
(22) Date of filing: 19.05.2003
(51) Int. Cl.: C08L 75/00, C08L 75/04, C08G 18/08, C08G 18/62, C08J 3/24

(54) **REACTIVE BLEND POLYMER COMPOSITIONS WITH THERMOPLASTIC POLYURETHANE**
REAKTIVE POLYMER ZUSAMMENSETZUNGEN MIT THERMOPLASTISCHEM POLYURETHAN
COMPOSITIONS DE MELANGE DE POLYMERES REACTIVES COMPRENANT DU POLYURETHANNE THERMOPLASTIQUE

(30) Priority: 17.06.2002 US 173268
(43) Date of publication of application: 16.03.2005
(73) Proprietor: Noveon, Inc., Cleveland, OH 44141-3247 (US)
(72) Inventor: LAGNEAUX, Didier, F-38460 Chozeu (FR); MELTZER, Donald, A., Akron, OH 44333 (US)
(74) Representative: Weber, Thomas
(86) International application number: PCT/US2003/016067
(87) International publication number: WO 2003/106563

(56) References cited:
- WO-A-95/00590
- US-A- 5 536 781
- US-A- 5 596 043

## Description

### FIELD OF THE INVENTION

The present invention relates to reactive blends of polymers made by melt blending and reacting a polymer having a hydroxyl, carboxylic acid, amine, amide, enamine, oxazolidine, epoxide, urethane, thioisocyanate, isocyanate, carbon dioxide, imine, thiol, acrylic, maleic anhydride, imide or ester functionality in the polymer with a thermoplastic polyurethane (TPU) polymer. The blending and reacting is accomplished by melt mixing the polymer to be reacted with a TPU in the presence of an isocyanate to form the polymer blend composition. The reactive blending may also be performed as the TPU is being made by adding the polymer to the TPU reaction mixture prior to reaction completion. This invention also relates to the process of reactive blending and articles made from the reactive blend polymers. Processes to compatibilize two or more normally immiscible TPU polymers are also disclosed. The compound formed via reactive blending can also be used to compatibilize immiscible polymer blends.

### BACKGROUND OF THE INVENTION

It is known that various polymers can be blended, such as by melt mixing, to achieve a combination of desired properties. If the two polymers can be rendered compatible, the physical properties achieved by the blend should be proportional to the levels of the individual polymers in the blend. When the two polymers used in the blend are less miscible or not compatible with each other, the blend will frequently have physical properties that are inferior to those exhibited by either polymer used alone.

For a blend of polymers to have higher physical properties, such as tensile strength, than either polymers alone, there must be a synergistic result.

Blends of polymers are desired to achieve a certain desirable physical or chemical property. Some polymers that exhibit certain excellent characteristics, such as weathering resistance, might be blended with a second polymer that exhibits poor weathering properties to improve the second polymer's weatherability. The concept of blending is frequently used to improve a certain polymer's performance while retaining other good features of the polymer. The practice of blending will usually involve some trade-off in properties, i.e., some properties will be improved while other properties are harmed.

Sometimes the trade-off in properties can be solved by making copolymers where different monomers are copolymerized together to make one polymer having the desired properties. This approach requires that the monomers be copolymerizable with each other and copolymers are usually more expensive than homopolymers.

It would be desirable to have an inexpensive method to reactive blend a TPU polymer with a second polymer, to achieve unusual property enhancement. TPU polymers can have low melt strength, which can sometimes make them difficult to process. It would be desirable to increase the melt viscosity of a TPU composition to improve melt processing, particularly when melt processed by extrusion equipment.

### BRIEF SUMMARY OF THE INVENTION

It is an object of the present invention to make a reactive blend composition of polymers with a thermoplastic polyurethane (TPU) polymer and at least one blend partner polymer which is capable of being chemically bonded with the TPU polymer by using an isocyanate-containing compound.

It is another object of the present invention to react a TPU polymer with at least one blend partner polymer having a hydroxyl, carboxylic acid, amine, amide, enamine, oxazolidine, epoxide, urethane, thioisocyanate, isocyanate, carbon dioxide, imine, thiol, acrylic, maleic anhydride, imide, ester or other isocyanate-reactive functional group present in said blend partner polymer.

It is a further object of the present invention to make a reactive blend of a TPU polymer and a blend partner polymer whereby the ultimate tensile strength of the reactive blend is greater than either the TPU polymer or the blend partner polymer when used alone.

It is another object of the present invention to provide a process for reacting a TPU polymer and a blend partner polymer.

It is another object of the present invention to provide articles made from reactive blends.

It is a further object of the present invention to provide a method to compatibilize two or more TPU polymers, which otherwise are not miscible with each other and to compatibilize TPU and non-TPU polymers.

These and other objects are accomplished by melt mixing the TPU polymer and at least one polyisocyanate compound with at least one blend partner polymer having a functional group that is capable of reacting with an isocyanate moiety or isocyanate-containing compound, where the polyisocyanate compound also reacts with the TPU polymer to chemically bond the TPU polymer and the blend partner polymer. The blend polymer preferably has a functionality group selected from the group consisting of hydroxyl, carboxylic acid, amine, amide, and ester.

### DETAILED DESCRIPTION OF THE PREFERRED EMBODIMENT

The first essential ingredient of the composition of this invention is at least one thermoplastic polyurethane (TPU for short) polymer.

### TPU POLYMER

The TPU polymer type used in this invention can be any conventional TPU polymer that is known to the art and in the literature. The TPU polymer is generally prepared by reacting a diisocyanate with an intermediate such as a hydroxyl terminated polyester, a hydroxyl terminated polyether, a hydroxyl terminated polycarbonate or mixtures thereof, with one or more chain extenders, all of which are well known to those skilled in the art.

The hydroxyl terminated polyester intermediate is generally a linear polyester having a number average molecular weight (Mn) of from 500 to 10,000, desirably from 700 to 5,000, and preferably from 700 to 4,000, an acid number generally less than 1.3 and preferably less than 0.8. The molecular weight is determined by assay of the terminal functional groups and is related to the number average molecular weight. The polymers are produced by (1) an esterification reaction of one or more glycols with one or more dicarboxylic acids or anhydrides or (2) by transesterification reaction, i.e., the reaction of one or more glycols with esters of dicarboxylic acids. Mole ratios generally in excess of more than one mole of glycol to acid are preferred so as to obtain linear chains having a preponderance of terminal hydroxyl groups. Suitable polyester intermediates also include various lactones such as polycaprolactone typically made from ,-caprolactone and a bifunctional initiator such as diethylene glycol. The dicarboxylic acids of the desired polyester can be aliphatic, cycloaliphatic, aromatic, or combinations thereof. Suitable dicarboxylic acids which may be used alone or in mixtures generally have a total of from 4 to 15 carbon atoms and include: succinic, glutaric, adipic, pimelic, suberic, azelaic, sebacic, dodecanedioic, isophthalic, terephthalic, cyclohexane dicarboxylic. Anhydrides of the above dicarboxylic acids such as phthalic anhydride, tetrahydrophthalic anhydride, or the like, can also be used. Adipic acid is the preferred acid. The glycols which are reacted to form a desirable polyester intermediate can be aliphatic, aromatic, or combinations thereof, and have a total of from 2 to 12 carbon atoms, and include ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, hydroquinone di(hydroxyethyl)ether 1,4-butanediol is the preferred glycol.

Hydroxyl terminated polyether intermediates are polyether polyols derived from a diol or polyol having a total of from 2 to 15 carbon atoms, preferably an alkyl diol or glycol which is reacted with an ether comprising an alkylene oxide having from 2 to 6 carbon atoms, typically ethylene oxide or tetrahydrofuran or mixtures thereof. For example, hydroxyl functional polyether can be produced by first reacting propylene glycol with propylene oxide followed by subsequent reaction with ethylene oxide. Primary hydroxyl groups resulting from ethylene oxide are more reactive than secondary hydroxyl groups and thus are preferred. Useful commercial polyether polyols include poly(ethylene glycol) comprising ethylene oxide reacted with ethylene glycol, poly(propylene glycol) comprising propylene oxide reacted with propylene glycol, poly(tetramethylene glycol) comprising water reacted with tetrahydrofuran (PTMEG). PTMEG is the preferred polyether intermediate. Polyether polyols further include polyamide adducts of an alkylene oxide and can include, for example, a N,N¹-dimethyl ethylenediamine adduct comprising the reaction product of ethylenediamine and propylene oxide, diethylenetriamine adduct comprising the reaction product of diethylenetriamine with propylene oxide, and similar polyamide type polyether polyols. Copolyethers can also be utilized in the current invention. Typical copolyethers include the reaction product of THF and ethylene oxide or THF and propylene oxide. These are available from BASF as Poly THF B, a block copolymer, and poly THF R, a random copolymer. The various polyether intermediates generally have a number average molecular weight (Mn), as determined by assay of the terminal functional groups which is an average molecular weight, of from 250 to 10,000, desirably from 500 to 5,000, and preferably from 700 to 3,000.

The polycarbonate-based polyurethane resin of this invention is prepared by reacting a diisocyanate with a blend of a hydroxyl terminated polycarbonate and a chain extender. The hydroxyl terminated polycarbonate can be prepared by reacting a glycol with a carbonate or phosgene.

U.S. Patent No. 4,131,731 for its disclosure of hydroxyl terminated polycarbonates and their preparation. Such polycarbonates are linear and have terminal hydroxyl groups with essential exclusion of other terminal groups. The essential reactants are glycols and carbonates. Suitable glycols are selected from cycloaliphatic and aliphatic diols containing 4 to 40, and preferably 4 to 12 carbon atoms, and from polyoxyalkylene glycols containing 2 to 20 alkoxy groups per molecular with each alkoxy group containing 2 to 4 carbon atoms. Diols suitable for use in the present invention include aliphatic diols containing 4 to 12 carbon atoms such as butanediol-1,4, pentanediol-1,4, neopentyl glycol, hexanediol-1,6, 2,2,4-trimethylhexanediol-1,6, decanediol-1,10, hydrogenated dilinoleylglycol, hydrogenated dioleylglycol; and cycloaliphatic diols such as cyclohexanediol-1,3, dimethylolcyclohexane-1,4, cyclohexanediol-1,4, dimethylolcyclohexane-1,3, 1,4-endomethylene-2-hydroxy-5-hydroxymethyl cyclohexane, and polyalkylene glycols. The diols used in the reaction may be a single diol or a mixture of diols depending on the properties desired in the finished product.

Polycarbonate intermediates which are hydroxyl terminated are generally those known to the art and in the literature. Suitable carbonates are selected from alkylene carbonates composed of a 5 to 7 membered ring having the following general formula: 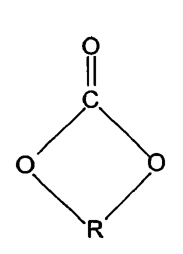 where R is a saturated divalent radical containing 2 to 6 linear carbon atoms. Suitable carbonates for use herein include ethylene carbonate, trimethylene carbonate, tetramethylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate, and 2,4-pentylene carbonate.

Also, suitable herein are dialkylcarbonates, cycloaliphatic carbonates, and diarylcarbonates. The dialkylcarbonates can contain 2 to 5 carbon atoms in each alkyl group and specific examples thereof are diethylcarbonate and dipropylcarbonate. Cycloaliphatic carbonates, especially dicycloaliphatic carbonates, can contain 4 to 7 carbon atoms in each cyclic structure, and there can be one or two of such structures. When one group is cycloaliphatic, the other can be either cycloaliphatic, alkyl or aryl. On the other hand, if one group is aryl, the other can be aryl, alkyl or cycloaliphatic. Preferred examples of diarylcarbonates, which can contain 6 to 20 carbon atoms in each aryl group, are diphenylcarbonate, ditolylcarbonate, and dinaphthylcarbonate.

The reaction is carried out by reacting a glycol with a carbonate, preferably an alkylene carbonate in the molar range of 10:1 to 1:10, but preferably 3:1 to 1:3 at a temperature of 100°C to 300°C and at a pressure in the range of 0.1 to 300 mm of mercury in the presence or absence of an ester interchange catalyst, while removing low boiling glycols by distillation.

More specifically, the hydroxyl terminated polycarbonates are prepared in two stages. In the first stage, a glycol is reacted with an alkylene carbonate to form a low molecular weight hydroxyl terminated polycarbonate. The lower boiling point glycol is removed by distillation at 100°C to 300°C, preferably at 150°C to 250°C, under a reduced pressure of 10 to 30 mm Hg, preferably 50 to 200 mm Hg. A fractionating column is used to separate the by-product glycol from the reaction mixture. The by-product glycol is taken off the top of the column and the unreacted alkylene carbonate and glycol reactant are returned to the reaction vessel as reflux. A current of inert gas or an inert solvent can be used to facilitate removal of by-product glycol as it is formed. When amount of by-product glycol obtained indicates that degree of polymerization of the hydroxyl terminated polycarbonate is in the range of 2 to 10, the pressure is gradually reduced to 0.1 to 10 mm Hg and the unreacted glycol and alkylene carbonate are removed. This marks the beginning of the second stage of reaction during which the low molecular weight hydroxyl terminated polycarbonate is condensed by distilling off glycol as it is formed at 100°C to 300°C, preferably 150°C to 250°C and at a pressure of 0.1 to 10 mm Hg until the desired molecular weight of the hydroxyl terminated polycarbonate is attained. Molecular weight (Mn) of the hydroxyl terminated polycarbonates can vary from 500 to 10,000 but in a preferred embodiment, it will be in the range of 500 to 2500.

Suitable extender glycols (i.e., chain extenders) are lower aliphatic or short chain glycols having from 2 to 10 carbon atoms and include for instance ethylene glycol, diethylene glycol, propylene glycol, dipropylene glycol, 1,4-butanediol, 1,6-hexanediol, 1,3-butanediol, 1,5-pentanediol, 1,4-cyclohexanedimethanol, hydroquinone di(hydroxyethyl) ether, neopentyglycol, with 1,4-butanediol being preferred.

The desired TPU polymer used as the TPU for the reactive blend composition of this invention is generally made from the above-noted intermediates such as a hydroxyl terminated polyesters, polyether, or polycarbonate, preferably polyester, which is further reacted with a polyisocyanate, preferably a diisocyanate, along with extender glycol desirably in a so-called one-shot process or simultaneous coreaction of polyester, polycarbonate or polyether intermediate, diisocyanate, and extender glycol to produce a high molecular weight linear TPU polymer. The preparation of the macroglycol is generally well known to the art and to the literature and any suitable method may be used. The weight average molecular weight (Mw) of the TPU polymer is generally 10,000 to 500,000, and preferably from 90,000 to 250,000. The equivalent weight amount of diisocyanate to the total equivalent weight amount of hydroxyl containing components, that is the hydroxyl terminated polyester, polyether, or poycarbonate, and chain extender glycol, is from 0.95 to 1.10, desirably from 0.96 to 1.02, and preferably from 0.97 to 1.005. Suitable diisocyanates include aromatic diisocyanates such as: 4,4'-methylene bis-(phenyl isocyanate) (MDI); m-xylylene diisocyanate (XDI), phenylene-1,4-diisocyanate, naphthalene-1,5-diisocyanate, diphenylmethane-3,3'-dimethoxy-4,4'-diisocyanate and toluene diisocyanate (TDI); as well as aliphatic diisocyanates such as isophorone diisocyanate (IPDI), 1,4-cyclohexyl diisocyanate (CHDI), decane-1,10-diisocyanate, and dicyclohexylmethane-4,4'-diisocyanate. The most preferred diisocyanate is 4,4'-methylene bis(phenyl isocyanate), i.e., MDI.

In the one-shot polymerization process which generally occurs in-situ, a simultaneous reaction occurs between three components, that is the one or more intermediates, the one or more polyisocyanates, and the one or more extender glycols, with the reaction generally being initiated at temperatures of from 100°C to 200°C. Inasmuch as the reaction is exothermic, the reaction temperature generally increases to 220°C-250°C.

The level of TPU polymer used in the reactive blend composition of this invention is from 20 to 95 weight parts based on 100 weight parts of the total weight of the TPU polymer and the blend partner polymer. Preferably the level of TPU polymer is from 35 to 85 weight parts. More preferably from 50 to 80 weight parts. A single TPU polymer can be used or a blend of two or more TPU polymers can be used to make the reactive blend composition of this invention. For most applications, it is preferred to use a single TPU polymer in the reactive blend composition. The selection of the particular TPU(s) used will depend on the desired end product application. TPU properties such as type of TPU (i.e., ester or ether), molecular weight, melting point and hardness are chosen depending on the end use application, as is well understood to those skilled in the art.

TPU polymers which are suitable for use in this invention are commercially available from several manufacturers such as Noveon, Inc., Dow Chemical, Huntsman Chemical, BASF and Bayer. Post industrial and post consumer recycle TPU may also be used in the compositions of this invention.

### BLEND PARTNER POLYMER

The composition of the present invention comprises at least one blend partner polymer having a functionality group capable of reacting with an isocyanate compound. Examples of functional groups capable of reacting with an isocyanate include hydroxyl, carboxylic acid, amine, amide, enamine, oxazolidine, epoxide, urethane, thioisocyanate, isocyanate, carbon dioxide, imine, thiol, acrylic maleic anhydride, imide or ester. Polymers which have hydroxyl groups include polyvinyl alcohol (PVOH) polymers, hydroxy ethyl methacrylate polymers and its copolymers, ethylene vinylalcohol (EVOH) polymers, polyoxymethylene (POM) polymers, copolyesters, copolyamides, poly(acrylate), and poly(alkyl acrylate). An example of a polymer which contains carboxyl groups is polyacrylic acid polymers. An example of a polymer which contains an amine group is Nylon-6,6 polymers. An example of a polymer which contains an amide group is polyvinyl pyrrolidone (PVP) polymers. Ester groups are found in poly(ethylene-co-vinyl acetate) (EVA) polymers and poly(vinyl acetate) (PVAc) polymers. EVA is a preferred blend partner polymer. The blend partner polymer should contain greater than 2 mole percent of the repeat unit containing the functional group, preferably greater than 5 mole percent and more preferably greater than 10 mole percent of the repeat unit containing the functional group capable of reacting with an isocyanate.

The EVA used as the blend partner polymer in this invention has from 2 to 50 weight percent vinyl acetate, preferably 10-45 weight percent vinyl acetate, and more preferably from 18-33 weight percent vinyl acetate. The particular choice of the vinyl acetate content of the EVA will depend on the desired properties of the reactive blend composition.

The level of blend partner polymer used in the reactive blend composition of this invention is from 5 to 80 weight parts based on 100 weight parts of the total weight of the TPU polymer and the blend partner polymer. Preferably, the level of blend partner polymer is from 15 to 65 weight parts. More preferably, from 20 to 50 weight parts of blend partner polymer is used in the reactive blend composition. A single blend partner polymer can be used or a blend of two or more blend partner polymers can be used to make the reactive blend composition of this invention. For most applications, it is preferred to use a single blend partner polymer in the reactive blend composition of this invention. The selection of the particular blend partner polymer used will depend on the desired end product application. Blend partner polymer properties such as flame and smoke resistance, melt processing properties, solvent resistance, weathering properties, and heat distoration temperature are chosen depending on the end use application, as is well understood to those skilled in the polymer art.

The term "blend partner" as used in this specification, refers to a polymer, other than a miscible TPU polymer, which is capable of reacting with an isocyanate. TPU polymers have functional groups, such as hydroxyl, which can react with an isocyanate. It is not intended that the blend partner be a miscible TPU polymer. However, the blend partner polymer may be a TPU polymer which is not miscible with the other TPU polymer used. For example, if a polyester based TPU polymer is used, the blend partner polymer can be a polyether TPU polymer.

In the normal prior art method of melt blending, a polyester TPU polymer is not miscible with a polyether TPU polymer. However, by using the reactive blending process of this invention, the polyester and polyether TPU polymers can be reactive blended to form useful polymers.

### ISOCYANATE COMPOUND

The isocyanate compound used in the reactive blend composition of this invention is one which will react the TPU polymer with the blend partner polymer under melt mixing conditions to form the composition of this invention. Suitable isocyanates are polyisocyanates, preferably diisocyanates. Suitable diisocyanates include aromatic diisocyanates such as: 4,4'-methylene bis-(phenyl isocyanate) (MDI); m-xylylene diisocyanate (XDI), phenylene-1,4-diisocyanate, naphthalene-1,5-diisocyanate, diphenylinethane-3,3'-dimethoxy-4,4'-diisocyanate and toluene diisocyanate (TDI); as well as aliphatic diisocyanates such as isophorone diisocyanate (IPDI), 1,4-cyclohexyl diisocyanate (CHDI), decane-1,10-diisocyanate, and dicyclohexylmethane-4,4'-diisocyanate. Dimers and trimers of the above diisocynates may also be used. The most preferred diisocyanate is 4,4'-methylene bis(phenyl isocyanate), i.e., MDI.

The polyisocyanate used in the reactive blend compositions of this invention may be in the form of a low molecular weight polymer or oligomer which is end capped with an isocyanate. For example, the hydroxyl terminated intermediate described above may be reacted with an isocyanate-containing compound to create a low molecular weight polymer end capped with isocyanate. In the TPU art, such materials are normally referred to as pre-polymers. Such pre-polymers normally have a number average molecular weight (Mn) of from 500 to 10,000.

Polyisocyanates having a functionality greater than 2.0, such as triisocyanates, may be used in sufficient amounts, especially if a crosslinked thermoset reactive blend composition is desired.

The level of polyisocyanate used in the composition of this invention is from 0.1 to 4.0 weight parts based on 100 weight parts of the combined weight of the TPU polymer and the blend partner polymer. The level and functionality of polyisocyanate used will determine whether a thermoplastic or thermoset reactive blend composition is produced. Above 2 weight parts of polyisocyanate, the reactive blend composition becomes more like a thermoset in that it is more viscous and more difficult to melt process once the blend has reacted. At levels of 4 weight parts of polyisocyanate, the reactive blend becomes a thermoset, even if a diisocyanate is used. If thermoplastic compositions are desired, the level of polyisocyanate used is from 0.1 to 2.0 weight parts. One or two or more different polyisocyanate may be used. Preferably, one polyisocyanate is used. Preferably, for a thermoplastic blend, the level of polyisocyanate used is from 0.5 to 1.75 weight parts and more preferably from 0.75 to 1.25 weight parts. The levels of polyisocyanate referred to in this paragraph are the levels added to the reactive blend and does not include the polyisocyanate which is used in making the base TPU polymer.

### REACTIVE PROCESSES

To produce the reactive blend compositions of this invention, the three essential ingredients [i.e., (1) at least one TPU polymer; (2) at least one blend partner polymer; and (3) at least one polyisocyanate] are reacted by melt blending. Any melt blending process known in the art and literature may be used to perform the reaction. Suitable processes include melt blending in a single screw extruder, a twin screw extruder, on a two roll mill, a screw feeding injection molding machine, or in an internal mixture such as a Banbury mixer. Preferably, an extruder is used to melt blend the ingredients to form the reactive blend composition. The process will be further described using the preferred extrusion process.

The polymer components (TPU and blend partner) are preferably fed to the extruder in pellet form, as is commercially available. The polyisocyanate can be fed in liquid or solid form (granulates or flakes) to the extruder. The mixing temperature of the melt in the extruder will be a temperature sufficient to melt the polymers such that they can be processed through an extruder. The exact temperature used will depend on the melt processing temperature of the highest melting point polymers used in the blend. Melt processing temperatures for a TPU/EVA blend will be from 150°C to 250°C, preferably from 170°C to 200°C, depending on the particular TPU and EVA used, as can be well understood by those skilled in the art of polymer blending. The ingredients are in the extruder for a very short time such as from about 5 seconds to about five minutes. The reaction does not need to be completed within the extruder, as it will continue after exiting the extruder. When blending a TPU with EVA, it is not necessary to pre-dry the polymers before reactive blending. The moisture in the atmosphere can go inside the pellets produced and the reaction can continue.

An alternate process to produce the reactive blend composition of this invention is to add the blend partner polymer in the process of making the TPU polymer. In this alternative process, the TPU precursor ingredients, i.e., (diisocyanate, hydroxyl terminated intermediate, and chain extender) are added to an extruder and the blend partner polymer is added to the extruder, much like a compounding ingredient. The level of polyisocyanate used is in excess of that required to produce the TPU polymer. The equivalent weight of polyisocyanate to the total equivalent weight amount of hydroxyl containing compounds, i.e., the hydroxyl terminated intermediate and chain extender is 1.0 to produce the TPU polymer. From 0.1 to 4.0 weight parts based on 100 weight parts of the combined weight of the TPU polymer precursors and the blend partner polymer, of polyisocyanate is used in excess of the 1.0 equivalent weight to produce the TPU polymer. The excess polyisocyanate may be added with the blend partner polymer or with the TPU polymer precursor ingredients. The preferred alternate process is the one-shot process described above in this specification. The TPU polymer is substantially formed before the blend partner polymer is added. The TPU polymer should be at least 80% reacted, and preferably 90% reacted before the blend partner is added. The reaction to form the TPU polymer will continue to completion in the presence of the blend partner polymer. To allow the TPU polymer to be substantially reacted before addition of the blend partner polymer, the blend partner polymer is added down-stream in the extruder nearer the exit (die) end of the extruder. For example, in an extruder having four heat zones and entry ports, the blend partner polymer would be added in zone 3 or zone 4, whereas the TPU reactants would be added in zone 1. The alternate process may include any of the normal well known processes to make TPU polymer with the exception that a blend partner polymer is added to the normal TPU process.

After exiting the extruder, the reactive blend composition is normally pelletized and stored as is typical for TPUs and is ultimely sold in pellet form. It being understood that the composition would not always need to be pelletized, but rather could be extruded directly from the reaction extruder through a die into a final product profile.

### OTHER INGREDIENTS

The reactive blend compositions may contain other ingredients which are customary in polymer compositions. Ingredients such as flame retardants, colorants, antioxidants, antiozonates, light stabilizers, fillers, foaming agents, and the like may be used. The level of the other ingredients may be from 0 to 100 weight parts based on 100 weight parts of the total weight of the TPU and blend partner polymer, depending on the desired end use application. If other ingredients are used, they may be mixed into the composition in the reactive melt blend or they may be added post-reaction in a compounding step. Compounding ingredients into polymer formulations is a well known art understood by those skilled in the art. Melt mixing equipment such as extruders, two roll mills, Banbury mixers and the like, may be used in the compounding step.

Flame retardants are particularly desirable ingredients to add to the compositions of this invention. Suitable flame retardants include melamine, melamine cyanurate, melamine borate, melamine phosphate, melamine derivatives, organic phosphates, organic phosphonates, halogenated compounds, and mixture thereof. Flame retardants are usually necessary for wire and cable end use applications. The level of flame retardants used for wire and cable jacketing is from 10 to 50 weight parts per 100 weight parts of the total weight of the TPU and blend partner polymer.

### USES

The reactive blend compositions of this invention have many uses where polymer compositions are currently used. Articles may be extruded into various profiles and shapes such as sheet, film, pipe, and other shaped articles. The compositions may be molded by injection molding, transfer molding or compression molding. The compositions may be calendered into sheet and film using conventional calendering equipment.

The reactive blend compositions may be used to compatibilize two or more immiscible polymers by proper selection of the blend partner polymer used. For example, the TPU/EVA reactive blend can be used to compatibilize TPU and polyethylene. The EVA component of the reactive blend is compatible with polyethylene. Likewise, the TPU/EVA reactive blend can compatibilize a blend of polyvinyl chloride (PVC) and polyethylene polymers, since the TPU component is compatible with PVC and the EVA component is compatible with polyethylene. PVC and polyethylene are normally immiscible when melt blended. As can be well understood by those skilled in the art, the proper selection of the blend partner polymer can allow numerous immiscible polymers to be compatibilized, by following the teachings of this disclosure.

When used as a compatiblizer for two or more immiscible polymers, the reactive blend composition is used at a level of from 0.2 weight parts to 20 weight parts, preferably 2.0 to 15.0 weight parts and more preferably 5.0 to 10.0 weight parts, based on 100 weight parts of the combined weight of the two or more immiscible polymers.

A particular desirable use for the TPU/EVA reactive blend is in wire and cable applications, such as jacketing for wire and cable. Wire and cable construction will have one or usually multiple metal conductors, such as wires. The metal conductors are insulated with a non conductive polymer. The complete package of insulated conductors are encased in a jacketing material. The TPU/EVA reactive blend increases the melt viscosity (melt strength) over a straight TPU polymer, such that processing is improved. Quite surprisingly, the TPU/EVA reactive blend composition has significantly greater tensile strength, as measured according to ASTM D412, than either the TPU polymer or the EVA polymer, when measured alone.

The invention will be better understood by reference to the following examples.

### EXAMPLES

Examples 1-14 are presented to show the present invention in the embodiment of a reactive blend of TPU polymer and EVA as the blend partner polymer. Examples 1-3, 5-6, 8, 10-11 and 15-16 are comparative examples. The composition of each example was run through an extruder to melt mix the composition. A twin screw corotative extruder from Werner & Pfleider, type ZSK 25 WLE with a screw diameter of 25 mm and a barrel length of 44 cm was used. The polymer components of the composition were fed to the extruder in pellet form and the polyisocyanate, when used, was fed to the extruder as a solid. The extruder was operated at a temperature of 190°C and an RPM of 400 and a feed rate of 20 Kg per hour. The output of the extruder was pelletized and sample test specimens were molded from the pellets.

The test samples from each example were tested for ultimate tensile strength and ultimate elongation according to ASTM D 412. Abrasion loss was tested according to DIN 53516. The melt flow (MVR) was tested for Examples 1-9 according to ASTM D1238 at 210°C under 8.7 Kg load.

The test results for the examples are shown in Table I below.

### EXAMPLE 1 (Comparative)

Example 1 is a comparative example to evaluate the physical properties of a polyester based TPU polymer. The TPU polymer used is Estane® 58213 available from Noveon, Inc. of Cleveland, Ohio U.S.A.

### EXAMPLE 2 (Comparative)

Example 2 is a comparative example to evaluate the physical properties of an EVA polymer. The EVA polymer used is Alcudia PA 538 available from Repsol YPF and has a vinyl acetate content of 18 wt. %.

### EXAMPLE 3 (Comparative)

Example 3 is a comparative example to evaluate the physical properties of a non-reactive melt blend of 70 weight parts TPU and 30 weight parts EVA. The TPU used is the same TPU as in Example 1 and the EVA is the same EVA as in Example 2.

### EXAMPLE 4

Example 4 is to show that the same composition (70% TPU/30% EVA) of Example 3 when made into a reactive blend by adding 1.0 weight part per 100 weight parts of total polymer (TPU & EVA) of a polyissocyanate (MDI) has improved tensile strength and abrasion resistance over either the TPU of Example 1 or the EVA of Example 2 or the non-reactive blend of Example 3 and has higher melt viscosity than the TPU alone of Example 1.

### EXAMPLE 5 (Comparative)

Example 5 is a comparative example to evaluate the physical properties of a polyether based TPU polymer. The TPU polymer used is Estane® 5714 available from Noveon, Inc. of Cleveland, Ohio U.S.A.

### EXAMPLE 6 (Comparative)

Example 6 is a comparative example to evaluate the physical properties of a non-reactive melt blend of 70 weight parts TPU and 30 weight parts EVA. The TPU used is the same TPU of Example 5 and the EVA used is the same EVA as in Example 2.

### EXAMPLE 7

Example 7 is presented to show that the same composition of Example 6 when made into a reactive blend by adding 1.0 weight part per 100 weight parts of total polymer (TPU & EVA) of a polyisocyanate (MDI) has improved tensile strength over either the TPU of Example 5 or the EVA of Example 2 or the non-reactive blend of Example 6 and improved abrasion resistance over the EVA of Example 2 and the non-reactive blend of Example 6 and has higher melt viscosity than the TPU alone of Example 5 or the non-reactive blend of Example 6.

### EXAMPLE 8 (Comparative)

Example 8 is a comparative example to evaluate the physical properties of a non-reactive melt blend of 60 weight parts TPU and 40 weight parts EVA. The TPU used is the same as in Example 5 and the EVA used is the same as in Example 2.

### EXAMPLE 9

Example 9 is presented to show that the same composition of Example 8 when made into a reactive blend by adding 1.0 weight part per 100 weight parts of total polymer (TPU & EVA) of a polyisocyanate (MDI) has improved tensile strength and abrasion resistance and has a higher melt viscosity than the non-reactive blend of Example 8.

### EXAMPLE 10 (Comparative)

Example 10 is a comparative example to evaluate the physical properties of a polyester based TPU polymer. The TPU polymer used in Gemothane® 951D available from Gemoplast of Lyon, France.

### EXAMPLE 11 (Comparative)

Example 11 is a comparative example to evaluate the physical properties of a non-reactive melt blend of 60 weight parts TPU and 40 weight parts EVA. The TPU used is the same as in Example 10 and the EVA used is the same as in Example 2.

### EXAMPLE 12

Example 12 is presented to show that the same composition of Example 11 when made into a reactive blend by adding 1.0 weight part per 100 weight parts of total polymer (TPU & EVA) of a polyisocyanate (MDI) has improved tensile strength and improved abrasion resistance as compared to the non-reactive blend of Example 11.

### EXAMPLE 13

Example 13 is presented to show a reactive blend of 70 weight parts of the TPU of Example 10 and 30 weight parts of the EVA of Example 2, reacted by using 1.0 weight part of polyisocyanate (MDI).

### EXAMPLE 14

Example 14 is presented to show a reactive blend of 80 weight parts of the TPU of Example 10 and 20 weight parts of the EVA of Example 2, reacted by using 1.0 weight part of polyisocyanate (MDI).

| TABLE I | | | | | | | | | |
|---|---|---|---|---|---|---|---|---|---|
| Ingredient (Parts by Weight) | | | | | | Property | | | |
| Ex. No. | TPU¹ | TPU² | TPU³ | EVA⁴ | MDI⁵ | Tensile Strength (MPA) | Ultimate Elongation % | Abrasion Loss (mm³) | MVR g/10 min. |
| * 1 | 100 | -- | -- | -- | -- | 22.5 | 1400% | 15 | 140 |
| *2 | -- | -- | -- | 100 | -- | 14.0 | 970% | 31 | 44 |
| *3 | 70 | -- | -- | 30 | -- | 13.0 | 1130% | 18 | 152 |
| 4 | 70 | -- | -- | 30 | 1.0 | 31.0 | 1400% | 11 | 43 |
| *5 | -- | 100 | -- | -- | -- | 20.0 | 1170% | 13 | 101 |
| *6 | -- | 70 | -- | 30 | -- | 11.0 | 1030 | 39 | 105 |
| 7 | -- | 70 | -- | 30 | 1.0 | 22.0 | 980 | 25 | 65 |
| *8 | -- | 60 | -- | 40 | -- | 10.0 | 930 | 50 | 90 |
| 9 | -- | 60 | -- | 40 | 1.0 | 19.0 | 1010 | 34 | 54 |
| *10 | -- | -- | 100 | -- | -- | 35.0 | 800 | 27 | ** |
| *11 | -- | -- | 60 | 40 | -- | 14.0 | 700 | 100 | ** |
| 12 | -- | -- | 60 | 40 | 1.0 | 24.0 | 600 | 60 | ** |
| 13 | -- | -- | 70 | 30 | 1.0 | 35.0 | 800 | 34 | ** |
| 14 | -- | -- | 80 | 20 | 1.0 | 39.0 | 800 | 40 | ** |

| | | | | | | | | | |
|---|---|---|---|---|---|---|---|---|---|
| 1. Polyester based TPU Estane® 58213 from Noveon, Inc., Cleveland, Ohio 2. Polyether based TPU Estane® 5714 from Noveon, Inc., Cleveland, Ohio 3. Polyester based TPU Gemothane® 951 D from Gemoplast, Lyon, France 4. EVA Alcudia® PA 538 from Repsol YPF 5. 4,4'-methylenebis (phenyl isocyanate), a diisocyanate known as Desmodur® 44M from Bayer A.G. of Germany * Indicates comparative example ** Indicates not tested for | | | | | | | | | |

From Table I, a comparison of Examples 3 and 4 shows that when a reactive blend of this invention (Example 4) is compared to a conventional melt blend (Example 3), the ultimate tensile strength is increased from 13 MPA to 31 MPA. The abrasion loss is also reduced (which is an improvement) from 18 mm³ to 11 mm³. The melt viscosity is increased from 152 g/10 min. to 43 g/10 min. Also, the data show a synergy between the two polymers as the tensile strength and abrasion resistance is better than the two polymers taken individually. A simple melt blend of the two polymers (Example 3) does not give these enhanced results. In fact, the melt blend of Example 3 shows lower tensile strength than either of the two polymers individually contained in the blend.

The melt viscosity, as demonstrated by the MVR results, shows that a simple non-reactive melt blend of TPU and EVA (Example 3, 6, and 8) tends to have a melt viscosity similar to the base TPU used in the blend. This is not surprising, since the TPU is the largest polymer component and thus is the continuous phase. Thus, the difficulty in processing TPU is not improved by a non-reactive blend with EVA, as long as the major component is TPU. It was very unexpected that the reactive blends of this invention (Examples 4, 7, 9, 12, 13, and 14), showed a melt viscosity closer to the EVA component even though the EVA is present in lesser amounts than the TPU. This indicates that the reactive blend will process more like EVA than TPU, thus resulting in very good processability. It is believed that the reduction in the MVR results of the reactive blend indicates that the molecular weight of the polymer has been increased as a result of bonding the TPU with the EVA through the polyisocyanate compound.

## Claims

1. A composition comprising the reaction product of:
a) at least one thermoplastic polyurethane polymer said thermoplastic polyurethane polymer having a weight average molecular weight of from 10,000 to 500,000 Daltons;
b) at least one blend partner polymer having a functionality group capable of reacting with an isocyanate; and
c) at least one polyisocyanate compound.

2. A composition of claim 1 wherein said blend partner polymer in b) has a functional group selected from hydroxyl, carboxylic acid, amine, amide, enamine, oxazolidine, epoxide, urethane, thioisocyanate, isocyanate, carbon dioxide, imine, thiol, acrylic, maleic anhydride, imide, and ester.

3. A composition of claim 1 wherein said thermoplastic polyurethane polymer is selected from polyester polyurethane, polyether polyurethane, and polycarbonate polyurethane.

4. A composition of claim 1 wherein said polyisocyanate compound in c) is a diisocyanate compound.

5. A composition of claim 1 wherein said thermoplastic polyurethane polymer is present at a level of from 20 to 95 weight parts and said blend partner polymer is present at a level of from 5 to 80 weight parts, said weight parts based on 100 weight parts of the combined weight of said thermoplastic polyurethane polymer and said blend partner polymer.

6. A composition of claim 5 wherein said thermoplastic polyurethane polymer is present at a level of from 35 to 85 weight parts and said blend partner polymer is present at a level of from 15 to 65 weight parts, said weight parts based on 100 weight parts of the combined weight of said thermoplastic polymer and said blend partner polymer.

7. A composition of claim 6 wherein said thermoplastic polyurethane polymer is present at a level of from 50 to 80 weight parts and said blend partner polymer is present at a level of from 20 to 50 weight parts, said weight parts based on 100 weight parts of the combined weight of said thermoplastic polyurethane polymer and said blend partner polymer.

8. A composition of claim 2 wherein said blend partner polymer has an ester functional group.

9. A composition of claim 8 wherein said blend partner polymer is a poly(ethylene-co-vinyl acetate) polymer.

10. A composition of claim 9 wherein said poly(ethylene-co-vinyl acetate) polymer has a vinyl acetate content of from 2 to 50 weight percent.

11. A composition of claim 10 wherein said poly(ethylene-co-vinyl acetate) has a vinyl acetate content of from 10 to 45 weight percent.

12. A composition of claim 11 wherein said poly(ethylene-co-vinyl acetate) has a vinyl acetate content of from 18 to 33 weight percent.

13. A composition of claim 2 wherein said blend partner polymer is selected from poly(vinyl alcohol), poly(hydroxy ethyl methacrylate) and its copolymers, poly(acrylic acid), poly(vinyl pyrrolidone), polyamide, poly(ethylene-co-vinyl acetate), poly(vinyl acetate), poly(oxymethylene), copolyesters, copolyamides, poly(acrylate), and poly(alkyl acrylate).

14. A composition of claim 4 wherein said diisocyanate compound is 4,4'-methylene bis (phenyl isocyanate).

15. A composition of claim 1 wherein said polyisocyanate compound is present at a level of from 0.1 to 4.0 parts by weight based on 100 parts by weight of the combined weight of said thermoplastic polyurethane polymer and said blend partner polymer.

16. A composition of claim 15 wherein said polyisocyanate compound is present at a level of from 0.5 to 1.75 parts by weight based on 100 parts by weight of the combined weight of said thermoplastic polyurethane polymer and said blend partner polymer.

17. A composition of claim 16 wherein said polyisocyanate compound is present at a level of from 0.75 to 1.25 parts by weight of said thermoplastic polyurethane polymer and said blend partner polymer.

18. A composition of claim 1 further comprising ingredients selected from flame retardants, colorants, antioxidants, antiozonates, light stabilizers, fillers, and foaming agents.

19. A composition of claim 18 wherein said ingredients comprise at least one flame retardant.

20. A composition of claim 19 wherein said flame retardant is selected from melamine, melamine cyanurate, melamine borate, melamine phosphate, melamine derivatives, organic phosphates, organic phosphonates, halogenated compounds, and mixtures thereof.

21. A composition of claim 20 wherein the level of said flame retardant is from 10 to 50 parts by weight per 100 parts by weight of the combined weight of said thermoplastic polyurethane polymer and said blend partner polymer.

22. A process for producing a polymer blend comprising melt mixing:
a) at least one thermoplastic polyurethane polymer said thermoplastic polyurethane polymer having a weight average molecular weight of from 10,000 to 500,000 Daltons;
b) at least one blend partner polymer having a functionality group capable of reacting with an isocyanate; and
c) at least one polyisocyanate compound.

23. A process of claim 22 wherein said melt mixing is performed in equipment selected from extruder, two roll mill, internal mixer, and injection molding machine.

24. A process of claim 23 wherein said melt mixing is performed in an extruder.

25. A process of claim 23 wherein said mixing is performed at a temperature which is higher than the melting temperature of either said thermoplastic polyurethane or said blend partner polymer.

26. A process of claim 24 wherein said thermoplastic polyurethane and said blend partner polymer and said polyisocyanate are mixed for a time of from about 5 seconds to about five minutes.

27. A process of claim 22 wherein said blend partner polymer has a functional group selected from hydroxyl, carboxylic acid, amine, amide, enamine, oxazolidine, epoxide, urethane, thioisocyanate, isocyanate, carbon dioxide, imine, thiol, acrylic, maleic anhydride, imide, and ester.

28. A process of claim 27 wherein said blend partner polymer has an ester functional group.

29. A process of claim 28 wherein said blend partner polymer is a poly(ethylene-co-vinyl acetate) polymer.

30. A process of claim 22 wherein said thermoplastic polyurethane polymer is selected from polyester polyurethane, polyether polyurethane and polycarbonate polyurethane.

31. A process of claim 22 wherein said thermoplastic polyurethane polymer is present at a level of from 20 to 95 weight parts and said blend partner polymer is present at a level of from 5 to 80 weight parts, said weight parts based on 100 weight parts of the combined weight of said thermoplastic polyurethane polymer and said blend partner polymer.

32. A process of claim 31 wherein said thermoplastic polyurethane polymer is present at a level of from 35 to 85 weight parts and said blend partner polymer is present at a level of from 15 to 65 weight parts, said weight parts based on 100 weight parts of the combined weight of said thermoplastic polymer and said blend partner polymer.

33. A process of claim 32 wherein said thermoplastic polyurethane polymer is present at a level of from 50 to 80 weight parts and said blend partner polymer is present at a level of from 20 to 50 weight parts, said weight parts based on 100 weight parts of the combined weight of said thermoplastic polyurethane polymer and said blend partner polymer.

34. A process of claim 22 wherein said polyisocyanate compound is a diisocyanate compound.

35. A process of claim 34 wherein said diisocyanate compound is 4,4'-methylene bis (phenyl isocyanate).

36. A process of claim 22 wherein said polyisocyanate compound is present at a level of from 0.1 to 4.0 parts by weight based on 100 parts by weight of the combined weight of said thermoplastic polyurethane polymer and said blend partner polymer.

37. A process of claim 36 wherein said polyisocyanate compound is present at a level of from 0.5 to 1.75 parts by weight based on 100 parts by weight of the combined weight of said thermoplastic polyurethane polymer and said blend partner polymer.

38. A process of claim 37 wherein said polyisocyanate compound is present at a level of from 0.75 to 1.25 parts by weight of said thermoplastic polyurethane polymer and said blend partner polymer.

39. A shaped article comprising the reaction product of:
a) at least one thermoplastic polyurethane polymer said thermoplastic polyurethane polymer having a weight average molecular weight of from 10,000 to 500,000 Daltons;
b) at least one blend partner polymer having a functionality group capable of reacting with an isocyanate; and
c) at least one polyisocyanate compound.

40. A shaped article of claim 39 wherein said article was shaped by extrusion.

41. A shaped article of claim 40 wherein said article was shaped by injection molding.

42. A shaped article of claim 40 wherein said article is a jacket for wire and cable construction.

43. A process for producing a reactive polymer blend comprising mixing:
a) at least one hydroxyl terminated intermediate;
b) at least one chain extender;
c) at least one polyisocyanate compound; and
d) at least one blend partner polymer having a functionality group capable of reacting with an isocyanate.

44. A process of claim 43, wherein said polyisocyanate compound is reacted to an extent greater than 99.5 percent with the hydroxyl groups of said hydroxyl terminated intermediate and said chain extender.

45. A process of claim 44, wherein said blend partner polymer has a function group selected from hydroxyl, carboxylic acid, amine, amide, enamine, oxazolidine, epoxide, urethane, thioisocyanate, isocyanate, carbon dioxide, imine, thiol, acrylic, maleic anhydride, imide, and ester.

46. A process of claim 45, wherein said polyisocyanate compound is a diisocyanate compound.

47. A process of claim 46, wherein said diisocyanate compound is present in an additional amount greater than 1.0 equivalent of isocyanate groups to hydroxyl groups of said hydroxyl terminated intermediate and said chain extender, said additional amount being from 0,1 to 4.0 parts by weight based on 100 parts by weight of said reactive polymer blend.

48. A process of claim 47, wherein said blend partner polymer is a poly(ethylene-co-vinyl acetate) polymer.

49. A process of claim 43, wherein said process is performed in a twin screw extruder.

## Patentansprüche

1. Zusammensetzung, die das Reaktionsprodukt umfasst von:
a) wenigstens einem thermoplastischen Polyurethanpolymer, wobei das thermoplastische Polyurethanpolymer ein Gewichtsmittel des Molekulargewichts von 10 000 bis 500 000 Dalton hat;
b) wenigstens einem Mischungspartnerpolymer, das eine funktionelle Gruppe aufweist, die mit einem Isocyanat reagieren kann; und
c) wenigstens einer Polyisocyanatverbindung.

2. Zusammensetzung gemäß Anspruch 1, wobei das Mischungspartnerpolymer in b) eine funktionelle Gruppe aufweist, die aus Hydroxy, Carbonsäure, Amin, Amid, Enamin, Oxazolidin, Epoxid, Urethan, Thioisocyanat, Isocyanat, Kohlendioxid, Imin, Thiol, Acryl, Maleinsäureanhydrid, Imid und Ester ausgewählt ist.

3. Zusammensetzung gemäß Anspruch 1, wobei das thermoplastische Polyurethanpolymer aus Polyesterpolyurethan, Polyetherpolyurethan und Polycarbonatpolyurethan ausgewählt ist.

4. Zusammensetzung gemäß Anspruch 1, wobei die Polyisocyanatverbindung in c) eine Diisocyanatverbindung ist.

5. Zusammensetzung gemäß Anspruch 1, wobei das thermoplastische Polyurethanpolymer in einer Menge von 20 bis 95 Gewichtsteilen vorhanden ist und das Mischungspartnerpolymer in einer Menge von 5 bis 80 Gewichtsteilen vorhanden ist, wobei die Gewichtsteile auf 100 Gewichtsteile des kombinierten Gewichts des thermoplastischen Polyurethanpolymers und des Mischungspartnerpolymers bezogen sind.

6. Zusammensetzung gemäß Anspruch 5, wobei das thermoplastische Polyurethanpolymer in einer Menge von 35 bis 85 Gewichtsteilen vorhanden ist und das Mischungspartnerpolymer in einer Menge von 15 bis 65 Gewichtsteilen vorhanden ist, wobei die Gewichtsteile auf 100 Gewichtsteile des kombinierten Gewichts des thermoplastischen Polyurethanpolymers und des Mischungspartnerpolymers bezogen sind.

7. Zusammensetzung gemäß Anspruch 6, wobei das thermoplastische Polyurethanpolymer in einer Menge von 50 bis 80 Gewichtsteilen vorhanden ist und das Mischungspartnerpolymer in einer Menge von 20 bis 50 Gewichtsteilen vorhanden ist, wobei die Gewichtsteile auf 100 Gewichtsteile des kombinierten Gewichts des thermoplastischen Polyurethanpolymers und des Mischungspartnerpolymers bezogen sind.

8. Zusammensetzung gemäß Anspruch 2, wobei das Mischungspartnerpolymer eine funktionelle Estergruppe aufweist.

9. Zusammensetzung gemäß Anspruch 8, wobei das Mischungspartnerpolymer ein Poly(ethylen-co-vinylacetat)-Polymer ist.

10. Zusammensetzung gemäß Anspruch 9, wobei das Poly(ethylen-co-vinylacetat)-Polymer einen Vinylacetatgehalt von 2 bis 50 Gew.-% hat.

11. Zusammensetzung gemäß Anspruch 10, wobei das Poly(ethylen-co-vinylacetat)-Polymer einen Vinylacetatgehalt von 10 bis 45 Gew.-% hat.

12. Zusammensetzung gemäß Anspruch 11, wobei das Poly(ethylen-co-vinylacetat)-Polymer einen Vinylacetatgehalt von 18 bis 33 Gew.-% hat.

13. Zusammensetzung gemäß Anspruch 2, wobei das Mischungspartnerpolymer aus Polyvinylalkohol, Polyhydroxyethylmethacrylat und seinen Copolymeren, Polyacrylsäure, Polyvinylpyrrolidon, Polyamid, Poly(ethylen-covinylacetat), Polyvinylacetat, Polyoxymethylen, Copolyestern, Copolyamiden, Polyacrylat und Polyalkylacrylat ausgewählt ist.

14. Zusammensetzung gemäß Anspruch 4, wobei es sich bei der Diisocyanatverbindung um 4,4'-Methylenbis(phenylisocyanat) handelt.

15. Zusammensetzung gemäß Anspruch 1, wobei die Polyisocyanatverbindung in einer Menge von 0,1 bis 4,0 Gewichtsteilen vorhanden ist, bezogen auf 100 Gewichtsteile des kombinierten Gewichts des thermoplastischen Polyurethanpolymers und des Mischungspartnerpolymers.

16. Zusammensetzung gemäß Anspruch 15, wobei die Polyisocyanatverbindung in einer Menge von 0,5 bis 1,75 Gewichtsteilen vorhanden ist, bezogen auf 100 Gewichtsteile des kombinierten Gewichts des thermoplastischen Polyurethanpolymers und des Mischungspartnerpolymers.

17. Zusammensetzung gemäß Anspruch 16, wobei die Polyisocyanatverbindung in einer Menge von 0,75 bis 1,25 Gewichtsteilen des thermoplastischen Polyurethanpolymers und des Mischungspartnerpolymers vorhanden ist.

18. Zusammensetzung gemäß Anspruch 1, die weiterhin Bestandteile umfasst, die aus Flammhemmern, Färbemitteln, Antioxidantien, Antiozonierungsmitteln, Lichtstabilisatoren, Füllstoffen und Treibmitteln ausgewählt sind.

19. Zusammensetzung gemäß Anspruch 18, wobei die Bestandteile wenigstens einen Flammhemmer umfassen.

20. Zusammensetzung gemäß Anspruch 19, wobei der Flammhemmer aus Melamin, Melamincyanurat, Melaminborat, Melaminphosphat, Melaminderivaten, organischen Phosphaten, organischen Phosphonaten, halogenierten Verbindungen und Gemischen davon ausgewählt ist.

21. Zusammensetzung gemäß Anspruch 20, wobei die Menge des Flammhemmers 10 bis 50 Gewichtsteile pro 100 Gewichtsteile des kombinierten Gewichts des thermoplastischen Polyurethanpolymers und des Mischungspartnerpolymers beträgt.

22. Verfahren zur Herstellung einer Polymermischung, umfassend das Schmelzmischen von:
a) wenigstens einem thermoplastischen Polyurethanpolymer, wobei das thermoplastische Polyurethanpolymer ein Gewichtsmittel des Molekulargewichts von 10 000 bis 500 000 Dalton hat;
b) wenigstens einem Mischungspartnerpolymer, das eine funktionelle Gruppe aufweist, die mit einem Isocyanat reagieren kann; und
c) wenigstens einer Polyisocyanatverbindung.

23. Verfahren gemäß Anspruch 22, wobei das Schmelzmischen in einem Gerät durchgeführt wird, das aus einem Extruder, einer Zweiwalzenmühle, einem Innenmischer und einer Spritzgussmaschine ausgewählt ist.

24. Verfahren gemäß Anspruch 23, wobei das Schmelzmischen in einem Extruder durchgeführt wird.

25. Verfahren gemäß Anspruch 23, wobei das Mischen bei einer Temperatur durchgeführt wird, die höher ist als die Schmelztemperatur entweder des thermoplastischen Polyurethans oder des Mischungspartnerpolymers.

26. Verfahren gemäß Anspruch 24, wobei das thermoplastische Polyurethan und das Mischungspartnerpolymer und das Polyisocyanat während einer Zeit von etwa 5 Sekunden bis etwa fünf Minuten gemischt werden.

27. Verfahren gemäß Anspruch 22, wobei das Mischungspartnerpolymer eine funktionelle Gruppe aufweist, die aus Hydroxy, Carbonsäure, Amin, Amid, Enamin, Oxazolidin, Epoxid, Urethan, Thioisocyanat, Isocyanat, Kohlendioxid, Imin, Thiol, Acryl, Maleinsäureanhydrid, Imid und Ester ausgewählt ist.

28. Verfahren gemäß Anspruch 27, wobei das Mischungspartnerpolymer eine funktionelle Estergruppe aufweist.

29. Verfahren gemäß Anspruch 28, wobei das Mischungspartnerpolymer ein Poly(ethylen-co-vinylacetat)-Polymer ist.

30. Verfahren gemäß Anspruch 22, wobei das thermoplastische Polyurethanpolymer aus Polyesterpolyurethan, Polyetherpolyurethan und Polycarbonatpolyurethan ausgewählt ist.

31. Verfahren gemäß Anspruch 22, wobei das thermoplastische Polyurethanpolymer in einer Menge von 20 bis 95 Gewichtsteilen vorhanden ist und das Mischungspartnerpolymer in einer Menge von 5 bis 80 Gewichtsteilen vorhanden ist, wobei die Gewichtsteile auf 100 Gewichtsteile des kombinierten Gewichts des thermoplastischen Polyurethanpolymers und des Mischungspartnerpolymers bezogen sind.

32. Verfahren gemäß Anspruch 31, wobei das thermoplastische Polyurethanpolymer in einer Menge von 35 bis 85 Gewichtsteilen vorhanden ist und das Mischungspartnerpolymer in einer Menge von 15 bis 65 Gewichtsteilen vorhanden ist, wobei die Gewichtsteile auf 100 Gewichtsteile des kombinierten Gewichts des thermoplastischen Polyurethanpolymers und des Mischungspartnerpolymers bezogen sind.

33. Verfahren gemäß Anspruch 32, wobei das thermoplastische Polyurethanpolymer in einer Menge von 50 bis 80 Gewichtsteilen vorhanden ist und das Mischungspartnerpolymer in einer Menge von 20 bis 50 Gewichtsteilen vorhanden ist, wobei die Gewichtsteile auf 100 Gewichtsteile des kombinierten Gewichts des thermoplastischen Polyurethanpolymers und des Mischungspartnerpolymers bezogen sind.

34. Verfahren gemäß Anspruch 22, wobei die Polyisocyanatverbindung eine Diisocyanatverbindung ist.

35. Verfahren gemäß Anspruch 34, wobei es sich bei der Diisocyanatverbindung um 4,4'-Methylenbis(phenylisocyanat) handelt.

36. Verfahren gemäß Anspruch 22, wobei die Polyisocyanatverbindung in einer Menge von 0,1 bis 4,0 Gewichtsteilen vorhanden ist, bezogen auf 100 Gewichtsteile des kombinierten Gewichts des thermoplastischen Polyurethanpolymers und des Mischungspartnerpolymers.

37. Verfahren gemäß Anspruch 36, wobei die Polyisocyanatverbindung in einer Menge von 0,5 bis 1,75 Gewichtsteilen vorhanden ist, bezogen auf 100 Gewichtsteile des kombinierten Gewichts des thermoplastischen Polyurethanpolymers und des Mischungspartnerpolymers.

38. Verfahren gemäß Anspruch 37, wobei die Polyisocyanatverbindung in einer Menge von 0,75 bis 1,25 Gewichtsteilen des thermoplastischen Polyurethanpolymers und des Mischungspartnerpolymers vorhanden ist.

39. Geformter Gegenstand, der das Reaktionsprodukt umfasst von:
a) wenigstens einem thermoplastischen Polyurethanpolymer, wobei das thermoplastische Polyurethanpolymer ein Gewichtsmittel des Molekulargewichts von 10 000 bis 500 000 Dalton hat;
b) wenigstens einem Mischungspartnerpolymer, das eine funktionelle Gruppe aufweist, die mit einem Isocyanat reagieren kann; und
c) wenigstens einer Polyisocyanatverbindung.

40. Geformter Gegenstand gemäß Anspruch 39, wobei der Gegenstand durch Extrusion geformt ist.

41. Geformter Gegenstand gemäß Anspruch 40, wobei der Gegenstand durch Spritzguss geformt ist.

42. Geformter Gegenstand gemäß Anspruch 40, wobei der Gegenstand eine Ummantelung für eine Draht- und Kabelkonstruktion ist.

43. Verfahren zur Herstellung einer reaktiven Polymermischung, umfassend das Mischen von:
a) wenigstens einem hydroxyterminierten Zwischenprodukt;
b) wenigstens einem Kettenverlängerer;
c) wenigstens einer Polyisocyanatverbindung; und
d) wenigstens einem Mischungspartnerpolymer, das eine funktionelle Gruppe aufweist, die mit einem Isocyanat reagieren kann.

44. Verfahren gemäß Anspruch 43, wobei die Polyisocyanatverbindung in einem Ausmaß von mehr als 99,5 Prozent mit den Hydroxygruppen des hydroxyterminierten Zwischenprodukts und des Kettenverlängerers umgesetzt wird.

45. Verfahren gemäß Anspruch 44, wobei das Mischungspartnerpolymer eine funktionelle Gruppe aufweist, die aus Hydroxy, Carbonsäure, Amin, Amid, Enamin, Oxazolidin, Epoxid, Urethan, Thioisocyanat, Isocyanat, Kohlendioxid, Imin, Thiol, Acryl, Maleinsäureanhydrid, Imid und Ester ausgewählt ist.

46. Verfahren gemäß Anspruch 45, wobei die Polyisocyanatverbindung eine Diisocyanatverbindung ist.

47. Verfahren gemäß Anspruch 46, wobei die Diisocyanatverbindung in einer zusätzlichen Menge von mehr als 1,0 Äquivalenten Isocyanatgruppen zu Hydroxygruppen des hydroxyterminierten Zwischenprodukts und des Kettenverlängerers vorhanden ist, wobei die zusätzliche Menge 0,1 bis 4,0 Gewichtsteile beträgt, bezogen auf 100 Gewichtsteile der reaktiven Polymermischung.

48. Verfahren gemäß Anspruch 47, wobei das Mischungspartnerpolymer ein Poly(ethylen-co-vinylacetat)-Polymer ist.

49. Verfahren gemäß Anspruch 43, wobei das Verfahren in einem Doppelschneckenextruder durchgeführt wird.

## Revendications

1. Composition comprenant le produit de réaction de :
a) au moins un polymère de polyuréthane thermoplastique, ledit polymère de polyuréthane thermoplastique ayant un poids moléculaire moyen en poids de 10 000 à 500 000 daltons ;
b) au moins un polymère partenaire de mélange ayant un groupe de fonctionnalité capable de réagir avec un isocyanate ; et
c) au moins un composé de polyisocyanate.

2. Composition selon la revendication 1, dans laquelle ledit polymère partenaire de mélange de b) possède un groupe fonctionnel choisi parmi un hydroxyle, un acide carboxylique, une amine, un amide, une énamine, un oxazolidine, une époxyde, un uréthane, un thioisocyanate, un isocyanate, un dioxyde de carbone, une imine, un thiol, un acrylique, un anhydride maléique, un imide et un ester.

3. Composition selon la revendication 1, dans laquelle ledit polymère de polyuréthane thermoplastique est choisi parmi un polyuréthane polyestérique, un polyuréthane polyéthérique et un polyuréthane polycarbonate.

4. Composition selon la revendication 1, dans laquelle ledit composé de polyisocyanate de c) est un composé de diisocyanate.

5. Composition selon la revendication 1, dans laquelle ledit polymère de polyuréthane thermoplastique est présent à un niveau de 20 à 95 parties en poids et ledit polymère partenaire de mélange est présent à un niveau de 5 à 80 parties en poids, lesdites parties en poids étant basées sur 100 parties en poids du poids combiné dudit polymère de polyuréthane thermoplastique et dudit polymère partenaire de mélange.

6. Composition selon la revendication 5, dans laquelle ledit polymère de polyuréthane thermoplastique est présent à un niveau de 35 à 85 parties en poids et ledit polymère partenaire de mélange est présent à un niveau de 15 à 65 parties en poids, lesdites parties en poids étant basées sur 100 parties en poids du poids combiné dudit thermoplastique polymère et dudit polymère partenaire de mélange.

7. Composition selon la revendication 6, dans laquelle ledit polymère de polyuréthane thermoplastique est présent à un niveau de 50 à 80 parties en poids et ledit polymère partenaire de mélange est présent à un niveau de 20 à 50 parties en poids, lesdites parties en poids étant basées sur 100 parties en poids du poids combiné dudit polymère de polyuréthane thermoplastique et dudit polymère partenaire de mélange.

8. Composition selon la revendication 2, dans laquelle ledit polymère partenaire de mélange possède un groupe fonctionnel ester.

9. Composition selon la revendication 8, dans laquelle ledit polymère partenaire de mélange est un polymère poly(éthylène-co-acétate de vinyle).

10. Composition selon la revendication 9, dans laquelle ledit polymère poly(éthylène-co-acétate de vinyle) a une teneur en acétate de vinyle de 2 à 50 pour cent en poids.

11. Composition selon la revendication 10, dans laquelle ledit poly(éthylène-coacétate de vinyle) a une teneur en acétate de vinyle de 10 à 45 pour cent en poids.

12. Composition selon la revendication 11, dans laquelle ledit poly(éthylène-coacétate de vinyle) a une teneur en acétate de vinyle de 18 à 33 pour cent en poids.

13. Composition selon la revendication 2, dans laquelle ledit polymère partenaire de mélange est choisi parmi un poly(alcool vinylique), un poly(méthacrylate d'hydroxyéthyle) et ses copolymères, un poly(acide acrylique), un poly(vinylpyrrolidone), un polyamide, un poly(éthylène-co-acétate de vinyle), un poly(acétate de vinyle), un poly(oxyméthylène), des copolyesters, des copolyamides, un poly(acrylate) et un poly(acrylate d'alkyle).

14. Composition selon la revendication 4, dans laquelle ledit composé de diisocyanate est le 4,4'-méthylène bis (isocyanate de phényle).

15. Composition selon la revendication 1, dans laquelle ledit composé de polyisocyanate est présent à un niveau de 0,1 à 4,0 parties en poids sur la base de 100 parties en poids du poids combiné dudit polymère de polyuréthane thermoplastique et dudit polymère partenaire de mélange.

16. Composition selon la revendication 15, dans laquelle ledit composé de polyisocyanate est présent à un niveau de 0,5 à 1,75 parties en poids sur la base de 100 parties en poids du poids combiné dudit polymère de polyuréthane thermoplastique et dudit polymère partenaire de mélange.

17. Composition selon la revendication 16, dans laquelle ledit composé de polyisocyanate est présent à un niveau de 0,75 à 1,25 parties en poids dudit polymère de polyuréthane thermoplastique et dudit polymère partenaire de mélange.

18. Composition selon la revendication 1, comprenant en outre des ingrédients choisis parmi des ignifugeants, des colorants, des antioxydants, des antiozonants, des photostabilisants, des charges et des agents moussants.

19. Composition selon la revendication 18, dans laquelle lesdits ingrédients comprennent au moins un ignifugeant.

20. Composition selon la revendication 19, dans laquelle ledit ignifugeant est choisi parmi la mélamine, le cyanurate de mélamine, le borate de mélamine, le phosphate de mélamine, les dérivés de la mélamine, les phosphates organiques, les phosphonates organiques, les composés halogénés et les mélanges de ceux-ci.

21. Composition selon la revendication 20, dans laquelle le niveau dudit ignifugeant est de 10 à 50 parties en poids pour 100 parties en poids du poids combiné dudit polymère de polyuréthane thermoplastique et dudit polymère partenaire de mélange.

22. Procédé de production d'un mélange de polymères comprenant le mélangeage à l'état fondu de :
a) au moins un polymère de polyuréthane thermoplastique, ledit polymère de polyuréthane thermoplastique ayant un poids moléculaire moyen en poids de 10 000 à 500 000 daltons ;
b) au moins un polymère partenaire de mélange ayant un groupe de fonctionnalité capable de réagir avec un isocyanate ; et
c) au moins un composé de polyisocyanate.

23. Procédé selon la revendication 22, dans lequel ledit mélangeage à l'état fondu est réalisé dans un appareil choisi parmi une extrudeuse, un broyeur à deux cylindres, un mélangeur interne et une machine de moulage par injection.

24. Procédé selon la revendication 23, dans lequel ledit mélangeage à l'état fondu est réalisé dans une extrudeuse.

25. Procédé selon la revendication 23, dans lequel ledit mélangeage est réalisé à une température qui est plus élevée que la température de fusion de soit ledit polyuréthane thermoplastique, soit ledit polymère partenaire de mélange.

26. Procédé selon la revendication 24, dans lequel ledit polyuréthane thermoplastique et ledit polymère partenaire de mélange et ledit polyisocyanate sont mélangés pendant un temps compris entre environ 5 secondes et environ cinq minutes.

27. Procédé selon la revendication 22, dans lequel ledit polymère partenaire de mélange possède un groupe fonctionnel choisi parmi un hydroxyle, un acide carboxylique, une amine, un amide, une énamine, un oxazolidine, une époxyde, un uréthane, un thioisocyanate, un isocyanate, un dioxyde de carbone, une imine, un thiol, un acrylique, une anhydride maléique, un imide et un ester.

28. Procédé selon la revendication 27, dans laquelle ledit polymère partenaire de mélange possède un groupe fonctionnel ester.

29. Procédé selon la revendication 28, dans lequel ledit polymère partenaire de mélange est un polymère poly(éthylène-co-acétate de vinyle).

30. Procédé selon la revendication 22, dans lequel ledit polymère de polyuréthane thermoplastique est choisi parmi un polyuréthane polyestérique, un polyuréthane polyéthérique et un polyuréthane polycarbonate.

31. Procédé selon la revendication 22, dans lequel ledit polymère de polyuréthane thermoplastique est présent à un niveau de 20 à 95 parties en poids et ledit polymère partenaire de mélange est présent à un niveau de 5 à 80 parties en poids, lesdites parties en poids étant basées sur 100 parties en poids du poids combiné dudit polymère de polyuréthane thermoplastique et dudit polymère partenaire de mélange.

32. Procédé selon la revendication 31, dans lequel ledit polymère de polyuréthane thermoplastique est présent à un niveau de 35 à 85 parties en poids et ledit polymère partenaire de mélange est présent à un niveau de 15 à 65 parties en poids, lesdites parties en poids étant basées sur 100 parties en poids du poids combiné dudit thermoplastique polymère et dudit polymère partenaire de mélange.

33. Procédé selon la revendication 32, dans lequel ledit polymère de polyuréthane thermoplastique est présent à un niveau de 50 à 80 parties en poids et ledit polymère partenaire de mélange est présent à un niveau de 20 à 50 parties en poids, lesdites parties en poids étant basées sur 100 parties en poids du poids combiné dudit polymère de polyuréthane thermoplastique et dudit polymère partenaire de mélange.

34. Procédé selon la revendication 22, dans lequel ledit composé de polyisocyanate est un composé de diisocyanate.

35. Procédé selon la revendication 34, dans lequel ledit composé de diisocyanate est le 4,4'-méthylène bis (isocyanate de phényle).

36. Procédé selon la revendication 22, dans lequel ledit composé de polyisocyanate est présent à un niveau de 0,1 à 4,0 parties en poids sur la base de 100 parties en poids du poids combiné dudit polymère de polyuréthane thermoplastique et dudit polymère partenaire de mélange.

37. Procédé selon la revendication 36, dans lequel ledit composé de polyisocyanate est présent à un niveau de 0,5 à 1,75 parties en poids sur la base de 100 parties en poids du poids combiné dudit polymère de polyuréthane thermoplastique et dudit polymère partenaire de mélange.

38. Procédé selon la revendication 37, dans lequel ledit composé de polyisocyanate est présent à un niveau de 0,75 à 1,25 parties en poids dudit polymère de polyuréthane thermoplastique et dudit polymère partenaire de mélange.

39. Article mis en forme comprenant le produit de réaction de :
a) au moins un polymère de polyuréthane thermoplastique, ledit polymère de polyuréthane thermoplastique ayant un poids moléculaire moyen en poids de 10 000 à 500 000 daltons ;
b) au moins un polymère partenaire de mélange ayant un groupe de fonctionnalité capable de réagir avec un isocyanate ; et
c) au moins un composé de polyisocyanate.

40. Article mis en forme selon la revendication 39, dans lequel ledit article a été mis en forme par extrusion.

41. Article mis en forme selon la revendication 40, dans lequel ledit article a été mis en forme par moulage par injection.

42. Article mis en forme selon la revendication 40, dans lequel ledit article est une gaine de fil et une construction de câble.

43. Procédé de production d'un mélange réactif de polymères comprenant le mélangeage de :
a) au moins un intermédiaire terminé par un hydroxyle ;
b) au moins un allongeur de chaîne ;
c) au moins un composé de polyisocyanate ; et
d) au moins un polymère partenaire de mélange ayant un groupe de fonctionnalité capable de réagir avec un isocyanate.

44. Procédé selon la revendication 43, dans lequel ledit composé de polyisocyanate est fait réagir à un degré plus grand que 99,5 pour cent avec les groupes hydroxyle dudit intermédiaire terminé par un hydroxyle et dudit allongeur de chaîne.

45. Procédé selon la revendication 44, dans lequel ledit polymère partenaire de mélange possède un groupe fonctionnel choisi parmi un hydroxyle, un acide carboxylique, une amine, un amide, une énamine, un oxazolidine, une époxyde, un uréthane, un thioisocyanate, un isocyanate, un dioxyde de carbone, une imine, un thiol, un acrylique, une anhydride maléique, un imide et un ester.

46. Procédé selon la revendication 45, dans lequel ledit composé de polyisocyanate est un composé de diisocyanate.

47. Procédé selon la revendication 46, dans lequel ledit composé de diisocyanate est présent en une quantité supplémentaire plus grande que 1,0 équivalent de groupes isocyanate aux groupes hydroxyle dudit intermédiaire terminé par un hydroxyle et dudit allongeur de chaîne, ladite quantité supplémentaire étant de 0,1 à 4,0 parties en poids sur la base de 100 parties en poids dudit mélange réactif de polymères.

48. Procédé selon la revendication 47, dans lequel ledit polymère partenaire de mélange est un polymère poly(éthylène-co-acétate de vinyle).

49. Procédé selon la revendication 43, dans lequel ledit procédé est réalisé dans une extrudeuse à double vis.
